# EUROPEAN PATENT APPLICATION

(11) **EP 4 851 767 A1**
(43) Date of publication of application: **09.12.2026**
(21) Application number: 25747740.6
(22) Date of filing: 23.01.2025
(51) Int. Cl.: G06F 3/0481

(54) **INTERACTION METHOD AND APPARATUS, DEVICE, AND STORAGE MEDIUM**

(30) Priority: 31.01.2024 CN 202410140800
(71) Applicant: Beijing Zitiao Network Technology Co., Ltd., Beijing 100190 (CN)
(72) Inventor: SONG, Shaohua, Beijing 100028 (CN); SONG, Wen, Beijing 100028 (CN); LI, Xin, Beijing 100028 (CN)
(74) Representative: Marks & Clerk LLP
(86) International application number: PCT/CN2025/074195
(87) International publication number: WO 2025/162171

(57) **Abstract**

The embodiments of the disclosure relate to an interaction method, an apparatus, a device, and a storage medium. The method proposed herein includes: displaying a playback interface of media content, the media content including at least an image portion, and the image portion including a plurality of images; and displaying a playback control in the playback interface, the playback control being configured to display indication information associated with the media content, the indication information representing a viewing progress of the plurality of images. In this way, the embodiments of the disclosure are able to utilize the playback control to present the viewing progress of the plurality of images in the media content.

## Description

The present application claims priority to Chinese Patent Application No. 202410140800.7, filed on January 31, 2024, and entitled "INTERACTION METHOD, APPARATUS, DEVICE, AND STORAGE MEDIUM", which is hereby incorporated by reference in its entirety.

### FIELD

Example embodiments of the present disclosure generally relate to the field of computers, and in particular, to an interaction method, an apparatus, a device, and a computer-readable storage medium.

### BACKGROUND

With the development of computer technologies, the Internet has become an important platform for people to exchange information. For example, people may create, share, or obtain various types of media content over the Internet. Multi-image content composed of a plurality of images and/or videos is an important type of media content, and how to help users browse such media content more efficiently is a focus of attention of the users.

### SUMMARY

In a first aspect of the present disclosure, a method of interaction is provided. The method includes displaying a playback interface of media content, the media content including at least an image portion, and the image portion including a plurality of images; and displaying a playback control in the playback interface, the playback control being configured to display indication information associated with the media content, the indication information representing a viewing progress of the plurality of images.

In a second aspect of the present disclosure, an apparatus of interaction is provided. The apparatus includes an interface displaying module, which is configured to display a playback interface of media content, the media content including at least an image portion, and the image portion including a plurality of images; and a control displaying module, which is configured to display a playback control in the playback interface, the playback control being configured to display indication information associated with the media content, the indication information representing a viewing progress of the plurality of images.

In a third aspect of the present disclosure, an electronic device is provided. The device includes at least one processing unit; and at least one memory, the at least one memory being coupled to the at least one processing unit, and storing instructions executable by the at least one processing unit. The instructions, when executed by the at least one processing unit, cause the device to implement the method of the first aspect.

In a fourth aspect of the present disclosure, a computer-readable storage medium is provided. The computer-readable storage medium has a computer program stored thereon, the computer program being executable by a processor to implement the method of the first aspect.

It should be understood that the content described in this summary is not intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages, and aspects of various embodiments of the present disclosure will become more apparent in conjunction with the drawings and with reference to the following detailed description. Throughout the drawings, the same or similar reference symbols refer to the same or similar elements, where:
FIG. 1 illustrates a schematic diagram of an example environment in which the embodiments according to the present disclosure may be implemented;
FIGS. 2A to 2C illustrate example interfaces according to some embodiments of the present disclosure;
FIGS. 3A and 3B illustrate example interfaces according to some embodiments of the present disclosure;
FIG. 4 illustrates a flowchart of an example interaction procedure according to some embodiments of the present disclosure;
FIG. 5 illustrates a schematic structural block diagram of an example interaction apparatus according to some embodiments of the present disclosure; and
FIG. 6 illustrates a block diagram of an electronic device capable of implementing a plurality of embodiments of the present disclosure.

### DETAILED DESCRIPTION

The embodiments of the present disclosure will be described in more detail below with reference to the drawings. Although some embodiments of the present disclosure are shown in the drawings, it should be understood that the present disclosure may be implemented in various forms, and should not be interpreted as limited to the embodiments set forth herein. Instead, these embodiments are provided for a more thorough and complete understanding of the present disclosure. It should be understood that the drawings and embodiments of the present disclosure are only for illustrated purposes, and are not intended to limit the protection scope of the present disclosure.

It should be noted that the titles of any section/subsection provided herein are not restrictive. Various embodiments are described throughout this article, and any type of embodiment may be included under any section/subsection. In addition, the embodiments described in any section/subsection may be combined with any other embodiments described in the same section/subsection and/or different sections/subsections in any manner.

In the description of the embodiments of the present disclosure, the term "include/comprise" and similar terms should be understood as open-ended inclusion, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve user data, data acquisition, and/or data use, etc. These aspects all comply with the corresponding laws, regulations, and related provisions. In the embodiments of the present disclosure, all data collection, acquisition, processing, machining, forwarding, use, etc. are carried out on the premise that the user is informed and confirms. Accordingly, when implementing the embodiments of the present disclosure, the user should be informed of the type, range of use, use scenarios, etc., of the data or information that may be involved, and the authorization of the user should be obtained, in an appropriate manner in accordance with relevant laws and regulations. The specific manner of informing and/or authorizing may vary according to the actual situation and application scenarios, and the scope of the present disclosure is not limited in this regard.

If the solutions in this specification and the embodiments involve personal information processing, the processing will be carried out on the premise that there is a legal basis (for example, the consent of the personal information subject is obtained, or it is necessary for the performance of a contract, etc.), and the processing will only be carried out within the scope of provisions or agreements. If a user refuses to process personal information other than the necessary information required for the basic functions, it will not affect the user's use of the basic functions.

As discussed above, the multi-image content composed of a plurality of images and/or videos is an important type of media content, and how to help users browse such media content more efficiently is a focus of attention of the users.

The embodiments of the present disclosure propose an interaction solution. According to the solution, a playback interface of media content may be presented, the media content including at least an image portion, and the image portion including a plurality of images. Further, a playback control may be displayed in the playback interface, the playback control being configured to present indication information associated with the media content, the indication information representing a viewing progress of the plurality of images.

In this way, the embodiments of the present disclosure are able to utilize the playback control to present the viewing progress of the plurality of images in the media content.

Various example implementations of the solution will be described in detail below in further combination with the drawings.

### Example Environment

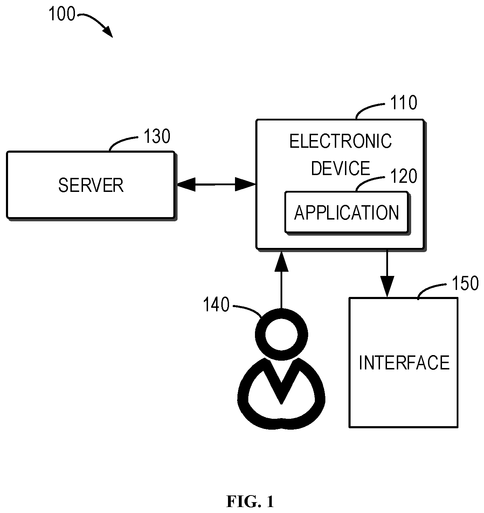

FIG. 1 illustrates a schematic diagram of an example environment 100 in which the embodiments of the present disclosure may be implemented. As shown in FIG. 1, the example environment 100 may include an electronic device 110.

In the example environment 100, the electronic device 110 may run an application 120 supporting interface interaction. The application 120 may be any appropriate type of application for interface interaction, examples of which may include but are not limited to: a video application, a social application, or other appropriate applications. A user 140 may interact with the application 120 via the electronic device 110 and/or its attached devices.

In the environment 100 of FIG. 1, if the application 120 is active, the electronic device 110 may present, through the application 120, an interface 150 for supporting interface interaction.

In some embodiments, the electronic device 110 communicates with a server 130 to enable provision of services of the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a gaming device, or any combination thereof, including the accessories and peripherals of these devices, or any combination thereof. In some embodiments, the electronic device 110 may also support any type of user-specific interface (such as "wearable" circuitry, etc.).

The server 130 may be an independent physical server, a server cluster or distributed system composed of a plurality of physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and so on. The server 130 may provide back-end services for the application 120 supporting the virtual scene in the electronic device 110.

A communication connection may be established between the server 130 and the electronic device 110. The communication connection may be established in a wired or wireless manner. The communication connection may include but is not limited to a Bluetooth connection, a mobile network connection, a universal serial bus (USB) connection, a wireless fidelity (WiFi) connection, etc., and the embodiments of the present disclosure are not limited in this regard. In the embodiments of the present disclosure, the server 130 and the electronic device 110 may implement signaling interaction through the communication connection between the two.

It should be understood that the structure and function of each element in the environment 100 are described for illustrated purposes only, without suggesting any limitation to the scope of the present disclosure.

In some embodiments, the electronic device 110 may display a playback interface of media content. In some examples, such media content includes at least an image portion, the image portion including a plurality of images. For example, the media content may include multi-image content composed of a plurality of pictures and/or videos.

Further, as will be described in detail below, the electronic device 110 displays a playback control in the playback interface, the playback control being configured to display indication information associated with the media content, the indication information representing a viewing progress of the plurality of images of the media content.

Some example embodiments of the present disclosure will be described below with continued reference to the drawings.

### First Example Playback Control

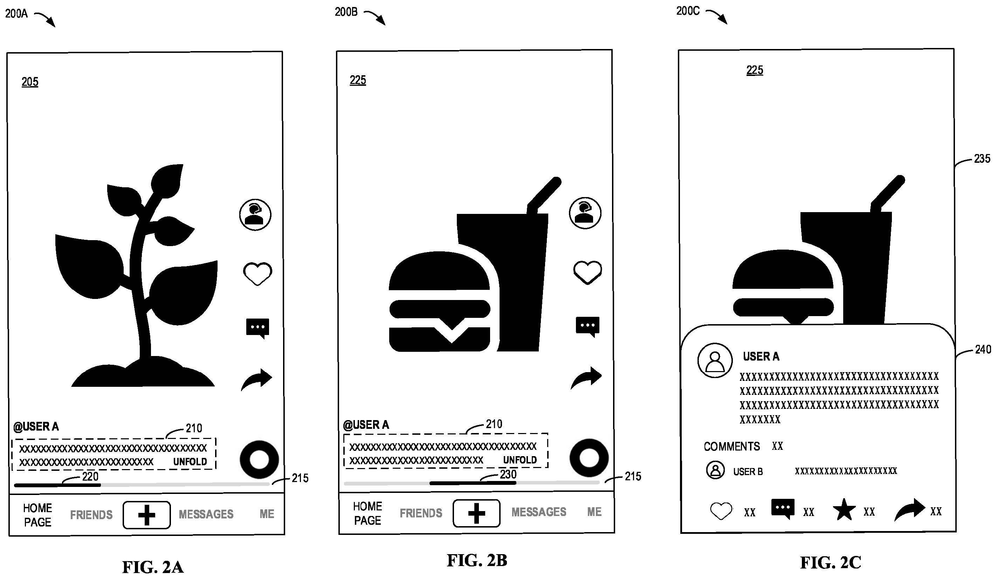

Example interactions according to some embodiments of the present disclosure will be described below in combination with FIGS. 2A to 2C. FIGS. 2A to 2C illustrate example interfaces 200A to 200C according to some embodiments of the present disclosure. The interfaces 200A to 200C, for example, may be provided by the electronic device 110 shown in FIG. 1.

As shown in FIG. 2A, the interface 200A may be a playback interface of media content. For example, the media content may be multi-image content, and the multi-image content may be composed of a plurality of images and/or video segments, and by sliding an image display area of the multi-image content, different images or video segments may be switched.

In some embodiments, such media content may include an image portion, which may include a plurality of images. As shown in FIG. 2A, the media content may be composed of three images, the first of which is an image 205.

As shown in FIG. 2A, the electronic device 110 may provide a playback control 215 for the media content in the interface 200A, and the playback control 215 may be used to present a viewing progress of the plurality of images of the media content.

In some embodiments, the playback control 215 may include a single progress indication element, such as a progress bar. Additionally, the single progress indication element includes a plurality of continuous element portions, and a target element portion in the single progress indication element that corresponds to a currently viewed target image is distinctively displayed.

Taking FIG. 2A as an example, in the case where the image 205 is currently being viewed, a first portion 220 corresponding to the image 205 in the progress bar may be distinctively displayed. For example, the first portion 220 may have a different color, brightness, transparency, display height, etc., from other portions of the progress indication element.

Further, as shown in FIG. 2B, when an image 225 in the media content is switched to the viewing state, a display style of an element portion 230 corresponding to the image 225 in the playback control 215 may be changed.

In some embodiments, the element portion 230 may be switched from the display style shown in FIG. 2A to the display style shown in FIG. 2B. In some examples, such style switching, for example, does not change the shape of the element portion 230, but only changes its display attributes such as color, brightness, transparency, and the like.

In some embodiments, the playback control 215 may also be, for example, a progress bar, and the progress bar may have a predetermined length, for example. For example, the length of the progress bar may be determined based on a size of a display screen of the electronic device 110.

Further, the progress bar may also include an identification element, for example, a highlighted line segment, that is moving from a start position according to the viewing progress of the plurality of images. In some embodiments, taking FIG. 2A as an example, when the image 205 is viewed, the identification element may be displayed at a position corresponding to the image 205 in the progress bar, and may be distinctively displayed in the progress bar.

In some embodiments, a size of the identification element may be determined based on a number of the plurality of images in the media content. For example, in an example where the media content includes three images, a length of the highlighted line segment may be, for example, one-third of the progress bar. Additionally or alternatively, the size of the identification element may be kept unchanged during the movement.

As an example, as shown in FIG. 2B, when the image 225 in the media content is switched to the viewing state, the identification element in the progress bar may be moved accordingly, for example, to a position corresponding to the image 225.

In this way, the embodiments of the present disclosure are able to provide the user with a playback control experience similar to a video progress bar, thereby improving the user interaction experience.

In some embodiments, such media content may also include a text portion, which may include, for example, text content input by the user. As an example, as shown in FIGS. 2A and 2B, the electronic device may display at least part of the content of the text portion in an area 210.

In some embodiments, when the currently viewed image changes, the area 210 may, for example, keep displaying the same text content.

In some embodiments, the area 210 may also display the text content corresponding to the currently being viewed image, for example, according to the change of the viewing image. Specifically, the area 210 in FIG. 2A may display the first text content corresponding to the image 205. Further, when the container is switched to display the image 225, the electronic device 110 may display the second text content corresponding to the image 225 in the text portion in the area 210.

In some embodiments, such first text content and/or second text content may be determined based on a configuration operation of the user. For example, the poster of the media content may input the corresponding text content for each image. Accordingly, the electronic device 110 may present the text content corresponding to a specific image when the specific image is viewed.

In some embodiments, the first text content and/or the second text content are determined by segmenting the text portion of the media content. For example, the user may input a plurality of paragraphs of text for the media content. The text portion may be segmented according to the format (such as a line break) or semantic information of the plurality of paragraphs of text, etc., to determine the text content corresponding to each image. Further, the electronic device 110 may present the text content corresponding to a specific image when the specific image is viewed.

Continuing to refer to FIG. 2B, the electronic device 110 may also present the interface 200C shown in FIG. 2C, for example, based on a preset operation of the user for the area 210 or the text content displayed in the area 210.

As shown in FIG. 2C, the interface 200C may include an area 235 and an area 240. The area 235 may be used to play the media content, for example, display the image 225 of the media content. The area 240 may be used to display all the contents of the text portion of the media content. Additionally, the area 240 may also display, for example, interactive information about the media content, such as comment information, collection information, forwarding information, and so on.

In some embodiments, the mode may indicate an image fill mode of the area 235.

In some embodiments, the mode may also indicate a layout mode of the area 235 and the area 240, for example. Taking FIG. 2C as an example, the layout mode may indicate that the area 235 and the area 240 overlap.

### Second Example Playback Control

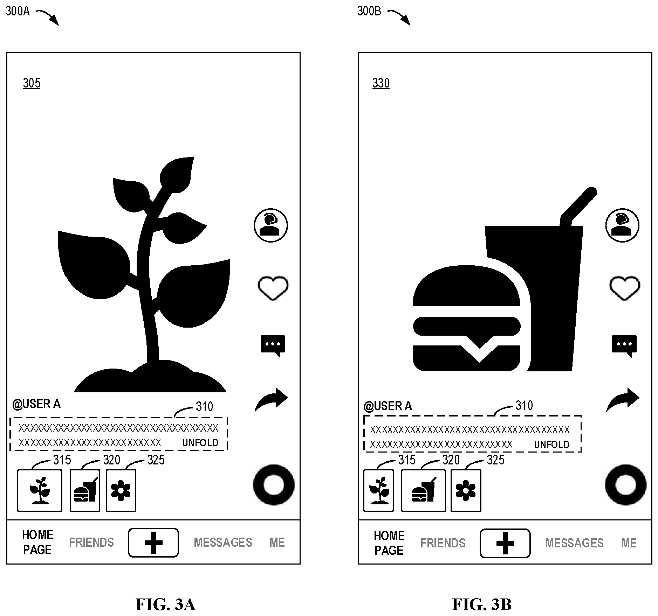

Example interactions according to some embodiments of the present disclosure will be described below in combination with FIGS. 3A to 3B. FIGS. 3A to 3B illustrate example interfaces 300A to 300B according to some embodiments of the present disclosure. The interfaces 300A to 300B, for example, may be provided by the electronic device 110 shown in FIG. 1.

As shown in FIG. 3A, the interface 300A may be a playback interface of media content. For example, the media content may be multi-image content, and the multi-image content may be composed of a plurality of images and/or video segments, and by sliding an image display area of the multi-image content, different images or video segments may be switched.

In some embodiments, such media content may include an image portion, which may include a plurality of images. As shown in FIG. 3A, the media content may be composed of three images, the first of which is an image 305.

As shown in FIG. 3A, the electronic device 110 may provide a playback control for the media content in the interface 300A, and the playback control may be used to present a viewing progress of the plurality of images of the media content. Specifically, as shown in FIG. 3A, the container may include a playback control for indicating the viewing progress of the plurality of images, and the playback control may include a plurality of thumbnails of the plurality of images, such as a thumbnail 315, a thumbnail 320, and a thumbnail 325. The thumbnail 315 may correspond to the image 305, for example.

As an example, the electronic device 110 may present the interface 300A in response to a presentation operation for the media content, and present at least one of the plurality of images (for example, the image 305) and at least part of the plurality of thumbnails (for example, the thumbnail 315, the thumbnail 320, and the thumbnail 325) in the interface 300A.

In some embodiments, as shown in FIG. 3A, the thumbnail 315 corresponding to the currently viewed image 305 may be distinctively displayed. For example, the thumbnail 315 may have a larger size than the thumbnail 320 and the thumbnail 325. Alternatively, the thumbnail 315 may have a different color style or border style, for example.

Further, as shown in FIG. 3B, when the electronic device 110 switches to display an image 330, the electronic device may accordingly adjust the display styles of the plurality of thumbnails to indicate the switching of the images. Specifically, the electronic device 110 may reduce the display size of the thumbnail 315 and increase the display size of the thumbnail 320.

In this way, the embodiments of the present disclosure may indicate the viewing state of the plurality of images by displaying the plurality of thumbnails of the multi-image work in the playback interface, and may indicate the switching of the images by the change of the display style of the thumbnails.

The playback controls of different styles are described above in combination with FIGS. 2A to 2C and FIGS. 3A and 3B. In some embodiments, the style of the playback control is also determined based on a posting path of the media content.

In some examples, the poster of the media content may post the media content through a first posting path (for example, a posting path corresponding to a presentation-type multi-image work) provided by a media platform. In some examples, such a first posting path may, for example, expect that the image portion of the media content is more likely to be noticed by the user.

In some examples, the poster of the media content may post the media content through a second posting path (for example, a posting path corresponding to a note-type multi-image work) provided by the media platform. In some examples, such a second posting path may, for example, expect that the text portion of the media content may be noticed by the user.

In some embodiments, corresponding playback controls may be provided based on different posting paths, so as to meet the playback control requirements of the media content posted through different posting paths through the playback controls of different styles.

### Example Procedure

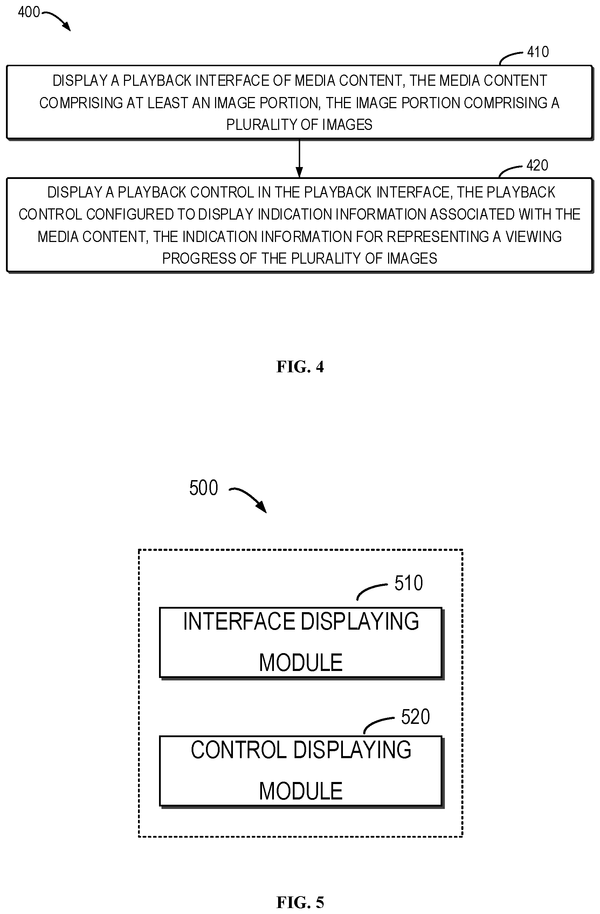

FIG. 4 illustrates a flowchart of an example interaction procedure 400 according to some embodiments of the present disclosure. The procedure 400 may be implemented at the electronic device 110. The procedure 400 will be described below with reference to FIG. 1.

As shown in the figure, at a block 410, the electronic device 110 displays a playback interface of media content, the media content including at least an image portion, and the image portion including a plurality of images.

At a block 420, the electronic device 110 displays a playback control in the playback interface, the playback control being configured to display indication information associated with the media content, the indication information representing a viewing progress of the plurality of images.

In some embodiments, the playback control includes a progress indication element, the progress indication element includes a plurality of continuous element portions, and a target element portion in the progress indication element that corresponds to a currently viewed target image is distinctively displayed.

In some embodiments, the playback control includes a progress bar, the target element portion includes an identification element, and the progress bar includes the identification element that is moving from a start position according to the viewing progress of the plurality of images.

In some embodiments, a size of the identification element is determined based on a number of the plurality of images; and/or the size of the identification element is kept unchanged during a switching process of the plurality of images.

In some embodiments, the identification element is distinctively displayed in the progress bar.

In some embodiments, the playback control displays a plurality of thumbnails of the plurality of images, where, when a third image is switched to a viewing state, a target thumbnail corresponding to the third image in the plurality of thumbnails is switched from a third style to a different fourth style.

In some embodiments, the third style and the fourth style correspond to different display sizes.

In some embodiments, the procedure 400 further includes: presenting at least one of the plurality of images and at least part of the plurality of thumbnails in the playback interface of the media content, in response to a presentation operation for the media content.

In some embodiments, the media content further includes a text portion, and the procedure 400 further includes: displaying at least part of content of the text portion in the playback interface.

In some embodiments, the at least part of content includes first text content corresponding to a first image currently being viewed in the plurality of images, and the procedure 400 further includes: displaying second text content corresponding to a second image in the text portion in the playback interface in response to the playback interface being switched to display a second image in the plurality of images,.

In some embodiments, the first text content and/or the second text content are determined based on a configuration operation of a user; or the first text content and/or the second text content are determined by segmenting the text portion.

In some embodiments, a style of the playback control is determined based on a posting path of the media content.

### Example Apparatus and Device

The embodiments of the present disclosure also provide a corresponding apparatus for implementing the above method or procedure. FIG. 5 illustrates a schematic structural block diagram of an example interaction apparatus 500 according to some embodiments of the present disclosure. The apparatus 500 may be implemented as or included in the electronic device 110. Each module/component in the apparatus 500 may be implemented by hardware, software, firmware, or any combination thereof.

As shown in FIG. 5, the apparatus 500 includes an interface displaying module 510, which is configured to display a playback interface of media content, the media content including at least an image portion, and the image portion including a plurality of images; and a control displaying module 520, which is configured to display a playback control in the playback interface, the playback control being configured to display indication information associated with the media content, the indication information representing a viewing progress of the plurality of images.

In some embodiments, the playback control includes a progress indication element, the progress indication element includes a plurality of continuous element portions, and a target element portion in the progress indication element that corresponds to a currently viewed target image is distinctively displayed.

In some embodiments, when a first image is switched to a viewing state, an element portion corresponding to the first image in the progress indication element is switched from a first style to a different second style, the first style and the second style corresponding to a same shape.

In some embodiments, the playback control includes a progress bar, the target element portion includes an identification element, and the progress bar includes the identification element that is moving from a start position according to the viewing progress of the plurality of images.

In some embodiments, a size of the identification element is determined based on a number of the plurality of images; and/or the size of the identification element is kept unchanged during a switching process of the plurality of images.

In some embodiments, the playback control displays a plurality of thumbnails of the plurality of images, where, when a third image is switched to a viewing state, a target thumbnail corresponding to the third image in the plurality of thumbnails is switched from a third style to a different fourth style.

In some embodiments, the third style and the fourth style correspond to different display sizes.

In some embodiments, the apparatus 500 further includes a thumbnail displaying module, which is configured to present at least one of the plurality of images and at least part of the plurality of thumbnails in the playback interface of the media content, in response to a presentation operation for the media content.

In some embodiments, the media content further includes a text portion, and the apparatus 500 further includes a text displaying module, which is configured to display at least part of content of the text portion in the playback interface.

In some embodiments, the at least part of the content includes first text content corresponding to a currently being viewed first image in the plurality of images, and the text displaying module is further configured to: in response to the playback interface switching to display a second image in the plurality of images, display second text content corresponding to the second image in the text portion in the playback interface.

In some embodiments, the first text content and/or the second text content are determined based on a configuration operation of a user; or the first text content and/or the second text content are determined by segmenting the text portion.

In some embodiments, a style of the playback control is determined based on a posting path of the media content.

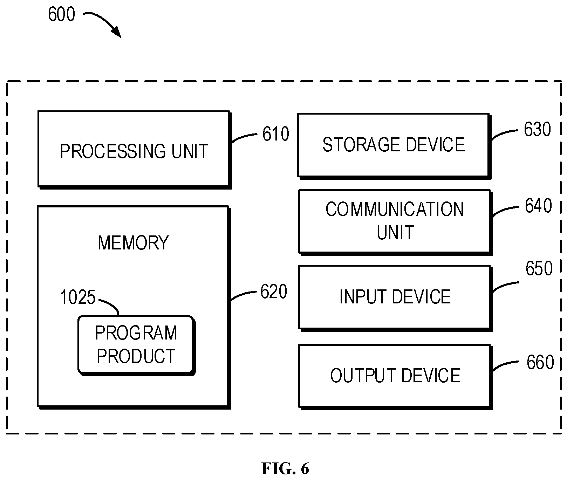

FIG. 6 illustrates a block diagram of an electronic device 600 in which one or more embodiments of the present disclosure may be implemented. It should be understood that the electronic device 600 shown in FIG. 6 is merely illustrated, and should not constitute any limitation to the functionality and scope of the embodiments described herein. The electronic device 600 shown in FIG. 6 may be used to implement the electronic device 110 in FIG. 1.

As shown in FIG. 6, the electronic device 600 is in the form of a general-purpose electronic device. The components of the electronic device 600 may include but are not limited to one or more processors or processing units 610, a memory 620, a storage device 630, one or more communication units 640, one or more input devices 650, and one or more output devices 660. The processing unit 610 may be an actual or virtual processor, and may perform various processes according to the programs stored in the memory 620. In a multiprocessor system, a plurality of processing units execute computer executable instructions in parallel, so as to improve the parallel processing capability of the electronic device 600.

The electronic device 600 typically includes a plurality of computer storage media. Such media may be any available media that is accessible to the electronic device 600, including but not limited to volatile and non-volatile media, and removable and non-removable media. The memory 620 may be a volatile memory (for example, a register, cache, a random access memory (RAM)), a non-volatile memory (such as a read-only memory (ROM), an electrically erasable programmable read-only memory (EEPROM), a flash memory), or any combination thereof. The storage device 630 may be any removable or non-removable medium, and may include a machine-readable medium such as a flash drive, a magnetic disk, or any other medium, that can be used to store information and/or data and that can be accessed within the electronic device 600.

The electronic device 600 may further include additional removable/non-removable, volatile/non-volatile storage media. Although not shown in FIG. 6, a magnetic disk drive for reading from or writing to a removable and non-volatile magnetic disk (such as a "floppy disk"), and an optical disk drive for reading from or writing to a removable and non-volatile optical disk may be provided. In these cases, each drive may be connected to the bus (not shown) by one or more data media interfaces. The memory 620 may include a computer program product 625, having one or more program modules configured to perform various methods or acts of the various embodiments of the present disclosure.

The communication unit 640 implements communication with other electronic devices through a communication medium. In addition, functions of components of the electronic device 600 may be implemented by a single computing cluster or a plurality of computing machines, and these computing machines can communicate through a communication connection. Therefore, the electronic device 600 may operate in a networked environment using logical connections to one or more other servers, a network personal computers (PC), or another network node.

The input device 650 may be one or more input devices, such as a mouse, a keyboard, a trackball, etc. The output device 660 may be one or more output devices, such as a display, a speaker, a printer, etc. The electronic device 600 may further communicate with one or more external devices (not shown) such as a storage device, a display device, or the like through the communication unit 540 as required, and communicate with one or more devices that enable a user to interact with the electronic device 600, or communicate with any device (e. g., a network card, a modem, or the like) that enables the electronic device 600 to communicate with one or more other electronic devices. Such communication may be performed via an input/output (I/O) interface (not shown).

According to an illustrated implementation of the present disclosure, a computer-readable storage medium is provided, on which a computer executable instruction stored thereon, where the computer executable instruction is executed by a processor to implement the above-described method. According to an illustrated implementation of the present disclosure, there is also provided a computer program product, which is tangibly stored on a non-transitory computer-readable medium and includes computer executable instructions, and the computer executable instructions are executed by a processor to implement the method described above.

Various aspects of the present disclosure are described herein with reference to the flowchart and/or block diagrams of the method, apparatus, device, and computer program product implemented in accordance with the present disclosure. It should be understood that each block of the flowchart and/or block diagram, and the combination of each block in the flowchart and/or block diagram may be implemented by computer-readable program instructions.

These computer-readable program instructions may be provided to a processing unit of a general-purpose computer, a special-purpose computer, or other programmable data processing apparatus to produce a machine, such that the instructions, when executed by the processing unit of the computer or other programmable data processing apparatus, create means for implementing the functions/actions specified in one or more blocks of the flowchart and/or block diagrams. These computer-readable program instructions may also be stored in a computer-readable storage medium, these instructions can direct a computer, a programmable data processing apparatus, and/or other devices to function in a particular manner, such that the computer-readable medium storing the instructions includes an article of manufacture including instructions an article of manufacture various aspects of the functions/actions specified in one or more blocks of the flowchart and/or block diagrams.

The computer-readable program instructions may be loaded onto a computer, other programmable data processing apparatus, or other devices, causing a series of operational steps to be performed on a computer, other programmable data processing apparatus, or other devices to produce a computer-implemented process, such that the instructions, when being executed on the computer, other programmable data processing apparatus, or other devices implement the functions/actions specified in one or more blocks of the flowchart and/or block diagrams.

The flowcharts and block diagrams in the drawings illustrate the architecture, functionality, and operations of possible implementations of the system, the method, and the computer program product according to various implementations of the present disclosure. In this regard, each block in the flowchart or block diagram may represent a module, segment, or portion of instructions which include one or more executable instructions for implementing the specified logical function(s). In some alternative implementations, the functions marked in the blocks may occur in a different order than those marked in the drawings. For example, two consecutive blocks may actually be executed substantially in parallel, or they may sometimes be executed in the reverse order, depending on the function involved. It should also be noted that each block in the block diagrams and/or the flowcharts, as well as combinations of the blocks in the block diagrams and/or the flowchart, may be implemented using a dedicated hardware-based system that performs the specified functions or actions, or may be implemented using a combination of dedicated hardware and computer instructions.

Various implementations of the present disclosure have been described as above, the foregoing description is illustrated, not exhaustive, and the present application is not limited to the disclosed implementations. Without departing from the scope and spirit of the described implementations, many modifications and variations will be apparent to those of ordinary skill in the art. The terms used herein are intended to best explain the principles, practical applications, or improvements to the technology in the market of each implementation, or to enable those skilled persons in the art to understand the implementations disclosed herein.

## Claims

1. A method of interaction, comprising:
displaying a playback interface of media content, the media content comprising at least an image portion, the image portion comprising a plurality of images; and
displaying a playback control in the playback interface, the playback control configured to display indication information associated with the media content, the indication information representing a viewing progress of the plurality of images.

2. The method of claim 1, wherein the playback control comprises a progress indication element, the progress indication element comprising a plurality of continuous element portions, and a target element portion in the progress indication element corresponding to a currently viewed target image is distinctively displayed.

3. The method of claim 2, wherein when a first image is switched to a viewing state, an element portion corresponding to the first image in the progress indication element is switched from a first style to a different second style, the first style and the second style corresponding to a same shape.

4. The method of claim 2, wherein the playback control comprises a progress bar, the target element portion comprises an identification element, and the progress bar comprises the identification element moving from a start position according to the viewing progress of the plurality of images.

5. The method of claim 4, wherein a size of the identification element is determined based on a number of the plurality of images; and/or
the size of the identification element is kept unchanged during a switching process of the plurality of images.

6. The method of claim 1, wherein the playback control displays a plurality of thumbnails of the plurality of images,
wherein in response to a third image being switched to a viewing state, a target thumbnail corresponding to the third image in the plurality of thumbnails is switched from a third style to a different fourth style.

7. The method of claim 6, wherein the third style and the fourth style correspond to different display sizes.

8. The method of claim 6, further comprising:
presenting at least one image of the plurality of images and at least part of the plurality of thumbnails in the playback interface of the media content, in response to a presentation operation for the media content.

9. The method of claim 1, wherein the media content further comprises a text portion, and the method further comprises:
displaying at least part of the text portion in the playback interface.

10. The method of claim 9, wherein the at least part of content comprises first text content corresponding to a first image currently being viewed first image of the plurality of images, and the method further comprises:
displaying second text content corresponding to a second image of the text portion in the playback interface, in response to the playback interface being switched to display the second image of the plurality of images.

11. The method of claim 10, wherein:
the first text content and/or the second text content are determined based on a configuration operation of a user; or
the first text content and/or the second text content are determined by segmenting the text portion.

12. The method of claim 1, wherein a style of the playback control is determined based on a posting path of the media content.

13. An apparatus of interaction, comprising:
an interface displaying module configured to display a playback interface of media content, the media content comprising at least an image portion, the image portion comprising a plurality of images; and
a control displaying module configured to display a playback control in the playback interface, the playback control configured to display indication information associated with the media content, the indication information representing a viewing progress of the plurality of images.

14. An electronic device, comprising:
at least one processing unit; and
at least one memory, the at least one memory coupled to the at least one processing unit and storing instructions executable by the at least one processing unit, the instructions, when executed by the at least one processing unit, causing the electronic device to perform the method of any of claims 1 to 12.

15. A computer-readable storage medium having a computer program stored thereon, the computer program executable by a processor to implement the method of any of claims 1 to 12.
